(19) **Europäisches Patentamt / European Patent Office / Office européen des brevets**

(11) **EP 4 157 747 B1**

(12) **EUROPEAN PATENT SPECIFICATION**

(45) Date of publication and mention
of the grant of the patent:
**23.07.2025  Bulletin 2025/30**

(21) Application number: **21727495.0**

(22) Date of filing: **28.05.2021**

(51) International Patent Classification (IPC):
**B65F 1/14** *(2006.01)*      **G06N 3/08** *(2023.01)*
**G06N 3/045** *(2023.01)*      G10L 25/51 *(2013.01)*
G06N 20/10 *(2019.01)*      G06N 3/044 *(2023.01)*
G06N 3/048 *(2023.01)*      G06N 5/01 *(2023.01)*

(52) Cooperative Patent Classification (CPC):
**B65F 1/14; G06N 3/045; G06N 3/08;**
B65F 2210/128; B65F 2210/168; G06N 3/044;
G06N 3/048; G06N 5/01; G06N 20/10; G10L 25/51

(86) International application number:
**PCT/EP2021/064445**

(87) International publication number:
**WO 2021/244988 (09.12.2021 Gazette 2021/49)**

(54) **A METHOD FOR CLASSIFYING WASTE**

VERFAHREN ZUR KLASSIFIZIERUNG VON ABFALL

PROCÉDÉ DE CLASSIFICATION DE DÉCHETS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2020  EP 20382460**

(43) Date of publication of application:
**05.04.2023  Bulletin 2023/14**

(73) Proprietor: **Candam Technologies S.L.**
**08030 Barcelona (ES)**

(72) Inventors:
• **BERGUINZO MARTÍNEZ, Jordi**
**08006 BARCELONA (ES)**
• **GODAY I BARILLAS, Sergi**
**08012 BARCELONA (ES)**

(74) Representative: **ZBM Patents - Zea, Barlocci &
Markvardsen**
**Rambla de Catalunya, 123**
**08008 Barcelona (ES)**

(56) References cited:
EP-A1- 3 194 954      CN-A- 111 160 438
KR-A- 20190 056 017    KR-A- 20190 071 387

## Description

### Cross-Reference to Related Applications

This application claims priority from patent application number EP20382460.2 filed on 31st May 2020.

## BACKGROUND ART

Recycling is an important part of nowadays waste reduction, and its proper management in largely populated areas has become key to address climate issues. Different recycling management systems and methods have been implemented in recent years, since a proper classification of the different types of waste reduces costs and improves the recycling chain. However, more complex classification methods aimed to detect and/or separate waste prior to its recycling are difficult to build and expensive in its manufacturing and maintenance. Therefore, a simpler and more cost-effective method for classifying waste is needed, which can still attain a high level of accuracy in the detection of different waste inserted in waste containers.

Document KR20190071387 discloses an apparatus and a method for automatically classifying recyclable waste. Document KR20190056017 discloses a method for automatic separation garbage cans using sound recognition. Document CN111160438 discloses an acoustic garbage classification method adopting one-dimensional convolutional neural network. Document EP3194954 A1 discloses an apparatus for characterizing a moving object using an impact sound on the object during the movement thereof after said object has been guided by a guiding element.

The methods disclosed in the mentioned documents are based on high computational costs and they may not be suitable to be deployed on embedded devices or on devices using limited resources or limited power supply.

## SUMMARY

According to an aspect of the present disclosure, a method for classifying waste items when inserted in a waste container is defined in claim 1.

According to the present disclosure, at the time the user inserts the waste item in a container, this time including the operation of insertion itself, the travel of the waste generates, at some point, a sound which may be captured as an audio signal by a sound sensor such as, for example, a directional microphone. The interaction between the waste item and the container is the waste item interacting with a friction element. Such interaction is the friction of the waste item with the friction element. A device may be provided in the container, in correspondence with the waste inlet, on which the waste can bounce or which the waste can hit, and produce a sound to be captured by the sound sensor. Such device may be, for example, friction element configured to be placed in the waste container. The friction element is configured such that, when the waste item is inserted into the container, the waste item slides along the friction element, and a sound produced by such interaction is captured by using a sound sensor. The friction element may be for example a slope attached to an inlet of the container and protruding downwards inside the container. The friction element may be for example a door found at the inlet of the container, or any other physical device which may interact with the waste item when inserted into the container, thus producing a sound that can be captured by the sound sensor. Depending on the specific design, a waste item inserted in the container may produce different types of sounds when interacting with parts of the container or elements found inside the container, thus a different type of microphone to capture audio signals may be used in each case.

The friction element may be made of polyurethane resin. The polyurethane resin allows generating a characteristic friction sound using a known material, this allows us to focus only on those sounds and thus improving the item identification.

When an audio signal in the form of, for example, a digital audio time signal, is captured, a calculation of the frequency components of the captured audio signal may be performed. Said calculation may be performed over part of the audio signal or performed over the whole audio signal, and it may be performed using different techniques, such as Fourier transform, wavelet transform or band-pass filter type calculations. Thus, a resulting signal, such as a spectrogram signal, may be obtained by using any of the above-mentioned calculations , the spectrogram signal comprising the power of the original audio signal for each frequency.

Furthermore, a classification of the captured audio signal is performed by means of a machine-learning classifier, thus obtaining a classification of the audio signal corresponding to a predetermined type of waste. A machine-learning classifier could be in the form of a Support Vector Machine (SVM), a Decision Trees Classifier, Sequence to Sequence model, or a neural network such as, for example, a Feed Forward Neural network, Multiple Layered Perceptron Neural network, Convolutional Neural network, Radial Basis Function Neural network, Recurrent Neural network, or Modular Neural network.

The use of a machine-learning classifier in such a way may result in a more effective and simple classification of waste, avoiding the use of mechanic or image-based classifications, the latter being dependent upon, for example, light conditions of the interior of the container or damage caused in the lens of a camera by the possible impact of waste, among others. This way, a sound-based classification may be more reliable when used in a difficult environment such as the interior of a container. The audio signals generated by the sound of the interaction of waste with the container may be more reliable when using such a classifier, and its computational cost may also be lower than using other types of signals to classify waste.

Furthermore, the method further comprises a step of obtaining a plurality of sound feature parameters from the calculated frequency components, which may be performed, for example, after calculating the frequency components of the captured audio signal; and wherein the classification is further performed based on the obtained sound feature parameters. More specifically, such sound feature parameters are Mel Frequency Spectral Coefficients (MFSC).

Some prior art methods employ classification of audio based on other sound feature parameters and based on the audio signal of hits of items against a container or receptacles. For example, other parameters used have been a parametric representation at a relatively minimised data rate, useful for subsequent processing and analysis of the audio signal. Therefore, it characterises the most important features of an audio signal while reducing the amount of data needed to handle the characteristics of the audio signal in subsequent calculations. Some features obtained from spectrograms of audio signals may be, for example, Zero-Crossing Rate (ZCR, henceforth), Spectral Centroid, Spectral Roll-off, Spectral Flux. Other possible sound feature parameters, which are used in speech feature extraction techniques are, for example, Mel Frequency Spectral Coefficients (MFSC), Mel Frequency Cepstral Coefficients (MFCC), Linear Prediction Coefficients (LPC), Linear Prediction Cepstral Coefficients (LPCC), Line Spectral Frequencies (LSF), Discrete Wavelet Transform (DWT) or Perceptual Linear Prediction (PLP), among other possibilities. Advantageously, the present disclosure defines capturing a sound signal corresponding to the friction of a waste item with a friction element. A sliding between two objects is advantageously longer and produces a more stable sound, or more homogeneous-during-more-time sound, in time than only hits or bounces between elements in containers. The sound lasts at least 0,1 seconds. The combination of both a stable sound signal of a friction sound and the MFSC allows maintaining an entry sound signal into the classifier for a longer time than hits so that the classifier is able to accurately classify waste items using only MFSC, thereby avoiding the calculation of MFCC. MFCC are calculated in other methods based on MFSC. The present disclosure presents therefore more computation-efficient methods than the prior art.

In other words, the sound generated by the methods of the present disclosure contains more sound data or information than the sound generated by other methods which use the sound of a hit, such hits being of a shorter duration than a friction or sliding interaction. The interaction is of at least 0,1 seconds. This provides that more coefficients, or more meaningful coefficients, will be inserted into the machine-learning classifier compared to other methods of the prior art. Besides, waste items whose shape or weight do not produce a strong sound signal are detected by a sensor when impacting against an object in the container. Providing more sound data than other methods also allows comparing the audio signal of a known material, since the data provided are more stable in time than a hit. Other examples of duration of the audio signal provided by the interaction between the waste item and the interaction element may be 0,2 seconds, or 0,3 seconds, or 0,4 seconds, or 0,5 seconds, or 0,6 seconds, or 0,7 seconds, or 0,8 seconds, or 0,9 seconds, or 1 second.

In the methods of the present disclosure, once a set of sound feature parameters is calculated, a classification of the captured audio signal as corresponding to a type of waste detected as a predetermined type of waste may be performed. The classification is performed by a machine-learning classifier such as, for example, a neural network, based on the obtained sound feature parameters.

More specifically, in the case of the neural network, the network may have been previously trained to classify different types of waste by using a set of sound feature parameters obtained from audio signals corresponding to different interactions of waste with the waste container. The training of the network may have been performed by using audio signals captured by inserting, for example, different types of cardboards, paper, plastic items, glass jars and bottles, compost items such as organic food, plastic bags, etc..., thus training the network to classify said different types of waste. By using a large quantity of items, thus having a big training dataset for the network, and a wide range of features of waste items (sizes, materials, shapes, etc...), the network would efficiently classify any new waste item that may be inserted in the container after the training.

Therefore, when a neural network is trained with a dataset corresponding to different types of waste, the dataset in the form of sound feature parameters, the network is able to classify waste items inserted in the container with a lower computational cost, thus making the overall process faster while still resulting in a reliable classification. As a result, a smaller neural network may be used, with smaller feature models, which may save memory space in, for example, a computing system. Furthermore, the higher the training of the neural network, the higher the accuracy of the classification may be, while still retaining a low computational cost.

According to an example, the neural network may have a Convolutional neural network architecture. Convolutional neural networks are commonly used in image and video recognition, although in recent years they have been used in the audio field in natural language processing systems. Furthermore, Convolutional neural networks can be downsized while still having a high performance balanced with a very low computational cost, hence resulting in accurate classifications with less memory used within a computing system.

When using a deep learning method, in the form of a neural network, to classify elements, it is a common practice to use normalised input data (whether of audio or video origin), in order to enable the artificial neural network to extract features of the input data in each hidden layer. This way, feature maps can be obtained as an output from each hidden layer of the neural network, to detect and classify certain input data (images, video, audio, etc...). Such use of normalised inputs may thus require more complex models which process large amounts of data and, hence, complex and heavy computations. Therefore, the resulting models may be very large and may involve a high computational cost, hence not being useful when a fast and effective classification is needed, while using a low amount of memory.

To reduce the size of the neural network while maintaining its accuracy, a feature engineering of the input data may be performed. More specifically, an extraction of well-known features of a specific input signal may be performed, using them as input data of the neural network, instead of normalised data.

In the case of audio data, frequency-based representations of the audio time signals are used, which may result in a better and more optimised representation of the audio data. Among others, the representations may be, for example, a Fourier Transformation of the input data or, according to the claimed invention, MFSC coefficients of the input data.

In particular, the use of the MFSC coefficients of the input audio data as inputs for the neural network allows optimising the computational cost of the overall method, while retaining a high efficiency in the classification of audio signals from interactions of waste with a waste container.

In order to obtain the MFSC coefficients, a spectrogram of the audio time signal may be calculated by using a Fast Fourier Transform (FFT) algorithm of the raw audio signal. Afterwards, the power of each frequency band may be calculated, and the resulting frequency signal may be multiplied by a plurality of MEL filters (the number of filters depending on the sampling frequency, the number of temporal windows or the width of said windows). The result of each multiplication is a coefficient to be used as the input data for the neural network. The matrix comprising the obtained MFSC coefficients (i.e. the input data for the neural network) may be usually referred to as a Mel Spectrogram.

According to an example, a useful range of the parameters used to obtain the MFSC of audio signals corresponding to waste interacting with a waste container may be:

- Sampling frequency in between 16Khz - 22 Khz;
- In between 10 and 60 filters;
- Up to 150 temporal windows of the original raw audio signal.

The range of sampling frequency (which is related to the temporal windows used to capture the audio signal) is due to the harmonics found in sounds providing from glass-type waste, which can reach up to 10Khz (thus making the sampling frequency range at least twice the highest frequency of glass, which is around 10Khz).

A further calculation of the MFCC coefficients, which would imply the calculation of the Discrete Cosine Transform Type 2 (DCT) of the calculated MFSCs may be performed in embodiments not covered by the attached claims. The following formula shows a possible calculation of the DCT to be applied to the calculated MFSCs, in order to obtain the MFCCs.

$$y_k = 2 \sum_{n=0}^{N-1} x_n \cos\left( \frac{\pi k(2n+1)}{2N} \right)$$

Furthermore, the obtained MFCCs have the same dimensions as the previously calculated MFSCs, being more descriptive than the MFSCs due to the decorrelation of the temporal features of the MFSCs.

According to another example of the disclosure, the capturing of the audio signal may be started by a trigger signal, the trigger signal being generated by a trigger module located at the inlet of the waste container. The trigger module may be, for example, a presence or movement sensor which may be located, for example, at the inlet of the waste container in such a way that when a waste is inserted, the waste itself is detected as passing in front of the sensor. Alternatively, if the container comprises a moving door attached to the inlet, which moves inwards into the container when a waste is inserted in the container, the sensor may also be placed in such a way to detect the movement of the door when a waste is inserted. Furthermore, other options may be used since the container comprises a friction element, for example, an entry slope attached to its inlet, and wherein the sensor is placed in a predetermined position of the friction element in order to detect the passing of a waste item along the slope after being inserted into the container. Other possibilities may further comprise detecting the presence of the user in front of the container or triggering the capturing of the audio signal by the signal of a switch activated when the door at the inlet of the container moves.

An example of such a movement sensor at the inlet of the waste container may be a Time-of-Flight (ToF) type sensor, or a module using a distance sensor which is triggered when the distance measured varies (i.e. the signal senses a lower distance because a waste crosses the beam of the signal).

Alternatively, the trigger signal may be manually generated by the user activating the trigger module, by, for example, pressing a button in a display right at the time before the waste is inserted into the container.

Furthermore, an alternative to generate a trigger signal to start the capture of the audio signal may be generated by continuously obtaining the audio signal over time. This way, a classifier, such as a neural network, may be able to distinguish when an audio signal corresponds to a predetermined type of waste and when the signal does not correspond to any predetermined type of waste. Therefore, it may also further select or classify the captured audio signal as a non-relevant signal.

More specifically, the classifier (such as, for example, a neural network) may detect a change in the continuously captured audio signal, therefore considering it relevant to be classified as corresponding to a predetermined type of waste. A non-relevant signal may be some sort of ambient noise, a silence (wherein the signal is not higher than a level, thus being considered as silence), or other types of sounds not corresponding to any waste item being inserted into the container (for example, an operator manipulating parts of the container, cars passing by the container, or any other noise produced in the surroundings of the container which may be captured by the sound sensor).

In examples, the method comprises obtaining an audio signal in a continuous way over time and capturing the at least one audio signal during at least 0,1 seconds corresponding to the interaction of a waste item with a friction element placed in the waste container by selecting at least one segment of the obtained audio signal. The at least one selected segment corresponds in these examples, to a recognized friction sound of a waste item with the friction element.

In examples, selecting the at least one segment of the obtained audio signal comprises classifying at least one second segment of the obtained audio signal as a non-relevant signal. In these examples, the at least one second segment corresponds to a segment which may be filtered out or which is recognized as not being a friction sound of a waste item with the friction element.

In an example, an audio signal may be continuously obtained over time. If the sound corresponding to a predetermined type of waste is detected by the sensors or by the audio classifier, then a duration of at least 0,1 seconds of the audio signal comprising the interaction of the waste item with the friction element when the waste item is inserted in the container is selected and, subsequently, the frequency components of the selected audio signal are calculated, and the selected part of the audio signal is classified based on the obtained Mel-Frequency Spectrum Coefficients MFSC, according to the methods of the present disclosure. The method may select only 1 part of at least 0,1 seconds or several parts of 0,1 seconds.

One of the advantages provided by "obtaining an audio signal in a continuous way over time and capturing the at least one audio signal during at least 0,1 seconds corresponding to the interaction of a waste item with a friction element placed in the waste", is that having a continuous audio acquisition, a sequence of audios is provided from which sound patterns that correspond to cheating actions may be determined, wherein cheating actions may be understood as actions where a user may start opening an aperture of the container for inserting a waste item but the insertion action is not actually finalised, or may be an action where a user produces a hit sound against the container, but there is actually no insertion of a waste item into the container. Other algorithms considering only hits, are not able to detect or discard these type of "non insertion" actions because audio sequences containing information about what happens before or after a waste item hits the container or metal plate in the container are not available.

According to another example, the classification performed by the machine-learning classifier may comprise the steps of:

- obtaining a feature map from the sound feature parameters and/or the frequency components;
- determining a feature threshold for at least one type of waste item;
- if the obtained feature map is higher than the predetermined feature threshold, determining that the audio signal corresponds to the corresponding type of waste item;

In the case of using the frequency components of the audio signal as an input to the machine-learning classifier, a feature map of the frequency components may be obtained. Furthermore, in case of using the sound feature parameters instead of the frequency components as an input for the machine-learning classifier, a feature map of said parameters may be obtained instead.

For example, when using a neural network, the obtained feature map may be the output of the last layer, which may be in the form of a probability vector which determines the probability that the input may be classified as each predetermined class. For example, in a neural network with three possible classifications, a possible vector may be [0.2 0.7 0.1], thus being a 20%, 70% and 10% probability that the input corresponds to the first, second or third predetermined classes. This way, a possible threshold in this case may be, for example, picking up the highest value of the obtained feature map (in this example, 0.7). Another predetermined threshold may be picking the value which is above 0.65, which, in the previous example, would still be 0.7.

Therefore, by determining a feature threshold (which may determine the acceptable likelihood of the input of the neural network to a signal corresponding to a predetermined type of waste, which the classifier has "learned" to classify), a user may set a standard of likelihood to be used by the neural network, thus achieving less false positives in the classification of an audio signal as corresponding to a type of waste.

According to a further aspect of the present disclosure, a system for classifying a waste item when inserted in a waste container is presented, the system is as defined in claim 9.

The classifier may be any of the previously described possible classifiers or neural networks, such as, for example, a Convolutional Neural Network.

As previously said, using MFSC allows reducing the computational costs compared to using other parameters. In case of the classifier being a Convolutional Neural network, the computational cost of the classification is further reduced, thus making the classification process a speedy and still effective one, when dealing with audio signals corresponding to interactions of waste items with the container. Any other classifiers or neural networks, may be used within the system, with varying results in effectiveness and speed in the calculations performed by the system.

Furthermore, according to an example, the system may comprise a trigger module arranged at the inlet of the waste container to detect that a waste item is being inserted in the waste container. The trigger module may comprise a sensor such as, for example, a light-based movement sensor, or an ultrasound movement or presence sensor, or any other type of sensor able to sense movement and/or presence of an item at the inlet of the container. Also, for example, the trigger module may be connected to the computing module, and the computing module may be configured to activate the sound sensor when it receives a signal from the trigger module that a waste item is being inserted in the waste container. Alternatively, the trigger module may sense the movement of a door found at the inlet of the container, or the hand of the user introducing the waste into the container, in such a way that it may also activate the sound sensor when such detections are performed.

The system further comprises a friction element configured to be placed in the waste container. The friction element is configured such that, when the waste item is inserted into the container, the waste item slides along the friction element, and a sound produced by such interaction is captured by using a sound sensor. The friction element may be for example an entry slope arranged at least partially inside the waste container and configured such that a waste item inserted into the container slides downwards on the slope, the slope further comprising a protrusion along a surface of the entry slope in a position on the sliding path of the waste item along the slope. Such protrusion may be a part of the surface of the slope being, for example, corrugated, or having a plurality of bumps which make the waste item to produce a louder or more characteristic noise when sliding through them, thus facilitating the classification by making the sound clearer or more distinguishable from other noises happening at the same time. Other examples of friction elements may comprise bristles. In some examples, the system may comprise a door which may be placed at least partially coupled to the inlet of the container, and wherein the friction element is the door of the system. Other examples of friction elements may comprise PVC strip curtains or any other flexible object covering the inlet of the container.

Furthermore, according to another example, all the mechanical parts of the system may be stationary. Since each container is placed in a different location, wherein the environment may not be controlled (i.e. for example, outdoors, on a crowded area, etc...), and each user may throw waste items in a different manner into the container, the system may have to be robust to different harsh environments. Therefore, the container may comprise mobile parts (such as, for example, an inlet door which moves when an item is inserted into the container), but all the parts which are used to produce a sound when a waste item is inserted into the container, and to capture the signal and to classify the captured signal, may be passive, thus simplifying the design of the system and making it more robust. Furthermore, the manufacturing cost may be reduced when designing a system with no moving parts. All of this may be achieved by manufacturing a system comprising only stationary parts.

The system of the present disclosure may implement any of the methods described herein.

The sound sensor is for capturing the at least one audio signal corresponding to the interaction of a waste item with the friction element during at least 0,1 seconds.

In some examples, the sound sensor obtains an audio signal in a continuous way over time and the system comprises a selection module for capturing the at least one audio signal during at least 0,1 seconds corresponding to the interaction of a waste item with a friction element placed in the waste container by selecting at least one segment of the obtained audio signal. The selecting module may be an integrated part of the computing module. The selecting module may be independent and external to the computing module.

As it may be apparent for a skilled person, a system as defined in the present disclosure may be coupled or installed in any existing waste container. Advantageously, the system provides versatility compared to other containers for classification of waste items which need to be bespokenly manufactured or manufactured according to specific requirements. The systems defined in the present disclosure provide, therefore, advantages such as reduced impact on existing items, reduced economical investment and greater environmental impacts, since the need for manufacturing process is reduced.

In examples, the previously described computing module may perform part of the method for classifying waste and may be located separately from the machine-learning classifier, which may be embodied in a remote server, instead of locally (which could also be possible, but would make the computing module to have more memory space to store the classifier therein).

## DESCRIPTION OF THE DRAWINGS

Figure 1 shows a waste container comprising a system for classifying waste according to an example of the present disclosure.
Figure 2A and 2B show views of a ramp according to an example of the present disclosure.

Figure 3 shows a general functioning diagram of a system for classifying waste according to an example of the present disclosure.

Figure 4 shows a diagram of the processing of the audio signal in the system for classifying waste of figure 3, according to an example of the present disclosure.

## DETAILED DESCRIPTION

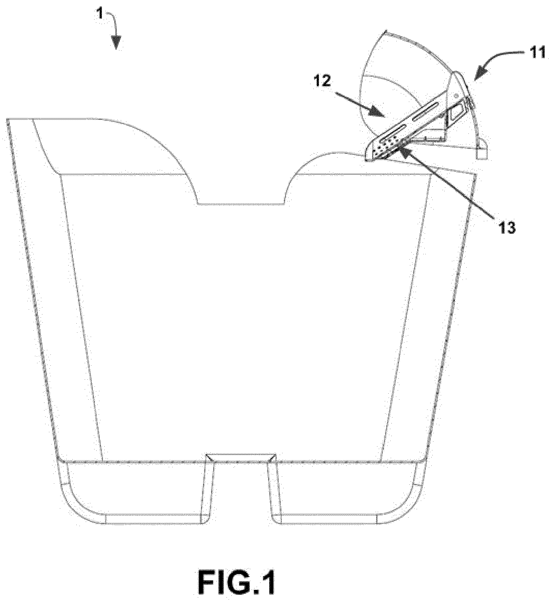

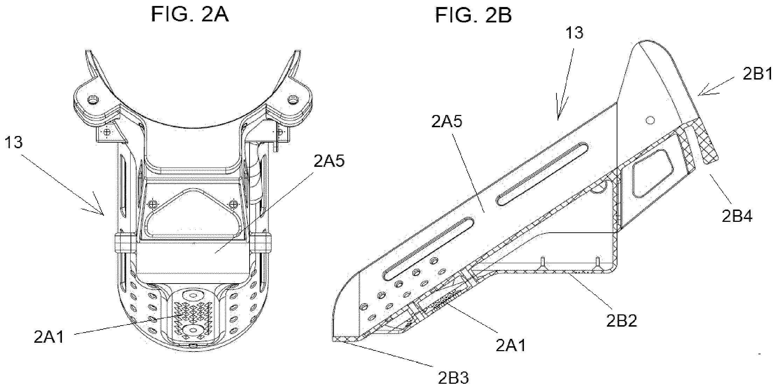

According to an example of the present disclosure, as shown in figure 1, a system for classifying waste may be implemented attached to a waste container 1, the container comprising an inlet 11 for the waste to be thrown therein. A device 12 may be installed at the inlet 11 of the container 1, the device 12 being fixed to the inlet 11 of the container 1, and further comprising a friction element 13. As shown in detail in figures 2A and 2B, the friction element 13, which in the figures is represented as an entry slope 13, may be attached to the inlet 11 of the container 1 through a gripping portion 2B4, enabling the inlet 11 to be aligned with a first end 2B1 of the slope. This way, when a waste item such as, for example, a piece of cardboard, or a glass or plastic bottle, is inserted in the container 1, the item may touch, at some point during its fall into the container 1, parts of the slope sliding surface 2A5 of the slope 13, producing a sound that can be captured by a sound sensor, such as a microphone 2B2 embedded below the slope sliding surface 2A5. Furthermore, the slope 13 comprises protrusion 2A1 and a change of surface level 2B3 at a second end of the slope 13. The protrusion 2A1 may be in the form of a plurality of bumps, or, for example, a ridged portion, wherein the surface is not smooth, causing the waste item to produce a specific or higher sound when sliding through that part of the slope sliding surface 2A5.

The system may also comprise a computing module as described in the present disclosure, such as a microprocessor, embedded with the microphone in a part of the slope 2B2 below the sliding surface 2A5. The microprocessor may further comprise a Data Buffer to store the data received by the microphone, and a communications module for sending processed audio data to an external server, the server comprising a Convolutional Neural network. The Convolutional Neural network may be trained with a data set of a plurality of audio signals corresponding to different waste items being thrown in a container equivalent to the container where the system is installed. This way, the neural network has been trained to classify audio signals such as the ones that may be produced in the container where the system is installed when a user throws a waste item (for example, a plastic bottle, a cardboard or paper item, glass bottles or organic waste) therein.

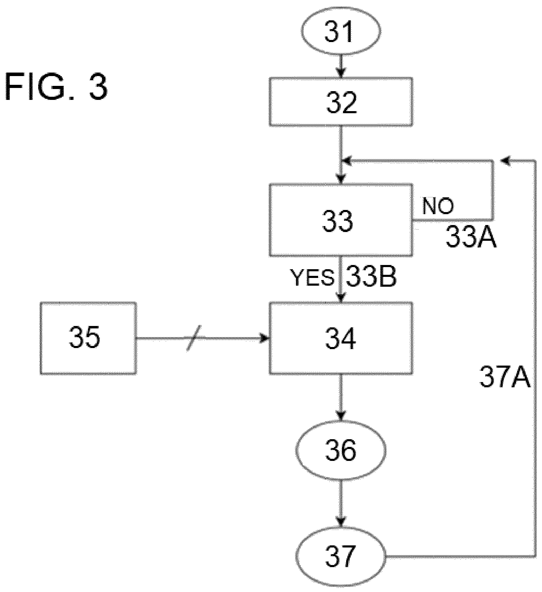

Figure 3 shows an example of a diagram block of the functioning of the system. More specifically, when the system is reset (block 31), the microprocessor enters a start-up state which initialises its peripherals, including a trigger module in the form of a movement sensor found at the inlet of the container, which according to the present example, may be a Time of Flight (ToF) sensor, such as, for example, a VL53L0X ToF sensor. After initialising (block 32), the system starts a listening loop function, as seen in figure 3, the loop comprising:

The inlet sensor continuously detecting movement (block 33), its signal being compared with a predetermined distance threshold (for example, 45mm) which indicates the sensor detecting no entry of any object through the inlet of the container.

If the comparison is zero, i.e. the distance is larger than the distance threshold, the sensor continues detecting movement (33A), and if the comparison is different than zero (33B, i.e. the distance may be less than 45mm), meaning there is an object in front of the signal of the sensor, the processor (block 34) starts capturing an audio signal (the capturing performed in block 34, and the audio signal coming from the microphone, in block 35). Then, the audio signal is processed, the features of the audio are obtained and the result data of the classification is calculated (all in block 36). Afterwards, the result of the classification is sent (block 37) through a bluetooth connection to the user, and the processor starts checking the distance again (37A).

In this case, the trigger signal used in order to start capturing an audio signal is a trigger signal generated by a movement sensor in the inlet of the container, although this may be combined or substituted by different trigger signals as previously disclosed.

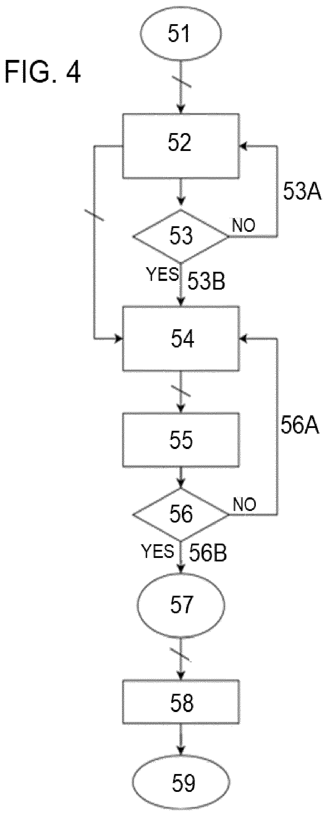

Figure 4 shows the steps of the processing of the audio depicted in block 36 of figure 3, the steps comprising:

In block 52 the Data Buffer comprised in the microprocessor is filled by forming digital packets coming from the raw audio signal of the microphone (data flow from 51), in this example the packets having 1024 samples.

In block 53 a checking if the Buffer is full is performed. In case of negative result 53A, more digital packets are sent to the Buffer.

When the Data Buffer is full 53B, in block 54, the MFSC coefficients are calculated using the data stored in the Buffer, by using packets of 512 samples (data flow from 52).

After calculating the MFSC coefficients for all the data stored in the Data Buffer, in block 55, by storing the calculated MFSC coefficients in a MFSC matrix (checking iteratively if it is full in block 56, if no 56A, if yes 56B), an MFSC matrix is obtained having dimensions of number of temporal windows by number of filters used in the MFSC calculation.

In block 57, a machine-learning classifier, which in this example is a convolutional neural network trained with audio signals from interactions of waste items with a friction element in a container, is used to classify the audio signal as a predetermined type of waste, by inputting the MFSC matrix to the neural network's input.

In block 58, a vector of size equal to the number of possible output classes is obtained as an output of the convolutional neural network, each element of the vector comprising a likelihood parameter of the corresponding class of type of waste.

In block 59, the result classification of the audio signal is obtained, wherein the higher value and its position in obtained the vector indicates the most likely class of type of predetermined waste the audio signal corresponds to.

The system according to the present example may be part of, for example, a system to reward recycling habits. For example, when used in a container for a specific type of waste (i.e., for example, plastic items), the amount of properly stored waste may be calculated for the container (as, for example, a percentage of plastic items thrown inside the container, among the total waste thrown therein). A user, on a personal level, may be identified previous to inserting a waste item in the container, and the system may detect the waste item is (or is not) the predetermined type of waste for the specific container. This way, if a user properly inserts 100% of plastic items in a plastic dedicated container, it may be rewarded for the correct use of the container.

This data may also be used to statistically measure what percentage of the habitants of a certain area is properly recycling waste. In this case, all the recycling containers may comprise the system to classify waste according to the present disclosure, and on a statistical level it may be calculated which percentage of the population is using the plastic container only for plastic waste, cardboard and paper container only for cardboard and paper, etc..., and according to the proper (or not) use of the recycling containers, citizens may be rewarded through, for example, a discount in the waste disposal tax of its community, therefore stimulating the proper use of recycling habits among the community.

## Claims

1. A method for classifying waste when inserted in a waste container, the method comprising:

    - capturing at least one audio signal, by using a sound sensor, the audio signal corresponding to the interaction of a waste item with a friction element in the waste container, when the waste item is inserted in the container, wherein the interaction comprises that the waste item slides on the friction element; wherein the audio signal lasts at least 0,1 seconds;
    - calculating the frequency components of the captured audio signal;
    - obtaining a plurality of Mel-Frequency Spectrum Coefficients, MFSC, from the calculated frequency components;

    - classifying the captured audio signal as corresponding to a type of waste item detected as a predetermined type of waste item, the classification being performed by a machine-learning classifier based on the obtained Mel-Frequency Spectrum Coefficients.

2. The method of claim 1 wherein the interaction comprises that the waste item slides on a slope.

3. The method of any of claims 1 or 2, wherein the machine-learning classifier is a neural network.

4. The method of claim 3, wherein the neural network has a convolutional neural network architecture.

5. The method of any of claims 1 to 4, comprising starting capturing the audio signal upon detection of a trigger signal, the trigger signal being generated by a trigger module located at an inlet of the waste container.

6. The method of any of claims 1 to 5, comprising

    - obtaining an audio signal in a continuous way over time and
    - capturing the at least one audio signal during at least 0,1 seconds corresponding to the interaction of a waste item with a friction element placed in the waste container by selecting at least one segment of the obtained audio signal.

7. The method of claim 6, wherein selecting the at least one segment of the obtained audio signal comprises classifying at least a second segment of the obtained audio signal as a non-relevant signal.

8. The method of any of claims 1 to 7, wherein the classification performed by the machine-learning classifier comprises the steps of:

    - obtaining a feature map from the Mel-Frequency Spectrum Coefficients, MFSC, and/or from the frequency components;
    - determining a feature threshold for at least one type of waste item;
    - if the obtained feature map is higher than the predetermined feature threshold, determining that the audio signal corresponds to the corresponding type of waste item.

9. A system for classifying a waste item when inserted in a waste container, the system comprising:

    - a friction element configured for being placed in a waste container for interacting with the waste item;
    - a sound sensor configured to capture at least one audio signal corresponding to the interaction of the waste item with the friction element, when the waste item is inserted in the container and slides on the friction element, wherein the sound sensor is for capturing the at least one audio signal corresponding to the interaction of a waste item with the friction element during at least 0,1 seconds;
- a computing module connected to the sound sensor and to a machine-learning classifier trained to classify audio signals corresponding to target waste items;
- wherein the computing module is configured for:

    - receiving an audio signal captured by the sound sensor; wherein the audio signal lasts at least 0,1 seconds;
    - calculating the frequency components of the captured audio signal;
    - obtaining a plurality of Mel-Frequency Spectrum Coefficients from the calculated frequency components;
    - sending the Mel-Frequency Spectrum Coefficients to the machine-learning classifier configured to classify the received audio signal as corresponding to a type of waste detected as a predetermined type of waste and wherein classifying the received audio signal is further performed based on the obtained Mel-Frequency Spectrum Coefficients.

10. The system of claim 9 wherein the friction element is a slope.

11. The system of any of claims 9 or 10, comprising a trigger module arranged at an inlet of the waste container, the trigger module configured to detect that a waste item is being inserted into the waste container.

12. The system of any of claims 9 to 11, wherein the friction element comprises an entry slope arranged at least partially inside the waste container and configured such that a waste item inserted into the container slides downwards on the slope, the slope further comprising a protrusion along a surface of the entry slope in a position on the sliding path of the waste item along the slope.

13. The system of any of claims 9 to 12, wherein all the mechanical parts of the system are stationary.

**Patentansprüche**

1. Ein Verfahren zum Klassifizieren von Abfällen, wenn sie in einen Abfallbehälter eingesetzt werden, wobei das Verfahren Folgendes umfasst:

    - erfassen von mindestens einem Audiosignal unter Verwendung eines Schallsensors, wobei das Audiosignal der Interaktion eines Abfallgegenstands mit einem Reibungselement in dem Abfallbehälter entspricht, wenn der Abfallgegenstand in den Behälter eingesetzt ist, wobei die Interaktion umfasst, dass der Abfallgegenstand auf dem Reibungselement gleitet; wobei das Audiosignal mindestens 0,1 Sekunden dauert;
    - berechnen der Frequenzkomponenten des erfassten Audiosignals;
    - erhalten einer Vielzahl von Mel-Frequenz-Spektrum-Koeffizienten, MFSC *(mel-frequency spectrum coefficient),* aus den berechneten Frequenzkomponenten;
    - klassifizieren des erfassten Audiosignals als einer Art von Abfallgegenstand entsprechend, der als eine vorbestimmte Art von Abfallgegenstand erkannt worden ist, wobei die Klassifizierung durch einen auf maschinellem Lernen basierten Klassifikator auf Grundlage der erhaltenen Mel-Frequenz-Spektrum-Koeffizienten durchgeführt wird.

2. Das Verfahren von Anspruch 1, wobei die Interaktion umfasst, dass der Abfallgegenstand auf einem Hang gleitet.

3. Das Verfahren von einem der Ansprüche 1 oder 2, wobei der auf maschinellem Lernen basierte Klassifikator ein neuronales Netzwerk ist.

4. Das Verfahren von Anspruch 3, wobei das neuronale Netzwerk eine Faltungsarchitektur eines neuronalen Netzwerks hat.

5. Das Verfahren von einem der Ansprüche 1 bis 4, umfassend das Starten des Erfassens des Audiosignals bei der Erfassung eines Auslösersignals, wobei das Auslösersignal von einem Auslösermodul erzeugt wird, das sich an einem Einlass des Abfallbehälters befindet.

6. Das Verfahren von einem der Ansprüche 1 bis 5, umfassend

    - erhalten eines Audiosignals in einer kontinuierlichen Weise über die Zeit und
    - erfassen des mindestens einen Audiosignals während mindestens 0,1 Sekunden entsprechend der Interaktion eines Abfallgegenstands mit einem in dem Abfallbehälter platzierten Reibungselement durch Auswählen von mindestens einem Segment des erhaltenen Audiosignals.

**7.** Das Verfahren von Anspruch 6, wobei das Auswählen des mindestens einen Segments des erhaltenen Audiosignals das Klassifizieren von mindestens einem zweiten Segments des erhaltenen Audiosignals als ein nicht relevantes Signal umfasst.

**8.** Das Verfahren von einem der Ansprüche 1 bis 7, wobei die von dem auf maschinellem Lernen basierten Klassifikator durchgeführte Klassifizierung die folgenden Schritte umfasst:

- erhalten einer Merkmalskarte von den Mel-Frequenz-Spektrum-Koeffizienten, MFSC, und/oder von den Frequenzkomponenten;
- bestimmen eines Merkmalsschwellenwerts für mindestens eine Art von Abfallgegenstand;
- wenn die erhaltene Merkmalskarte höher als der vorbestimmte Merkmalsschwellenwert ist, Bestimmen, dass das Audiosignal der entsprechenden Art von Abfallgegenstand entspricht.

**9.** Ein System zum Klassifizieren eines Abfallgegenstands, wenn er in einen Abfallbehälter eingesetzt wird, wobei das System Folgendes umfasst:

- ein Reibungselement, das dazu konfiguriert ist, in einem Abfallbehälter angeordnet zu werden, um mit dem Abfallgegenstand zusammenzuwirken;
- einen Schallsensor, der dazu konfiguriert ist, mindestens ein Audiosignal zu erfassen, das der Interaktion des Abfallgegenstands mit dem Reibungselement entspricht, wenn der Abfallgegenstand in den Behälter eingesetzt ist und auf dem Reibungselement gleitet, wobei der Schallsensor dazu dient, das mindestens eine Audiosignal zu erfassen, das der Interaktion eines Abfallgegenstands mit dem Reibungselement während mindestens 0,1 Sekunden entspricht;
- ein Rechenmodul, das mit dem Schallsensor und einem auf maschinellem Lernen basierten Klassifikator verbunden ist, der ausgebildet ist, um Audiosignale zu klassifizieren, die Zielabfallgegenständen entsprechen;
- wobei das Rechenmodul dazu konfiguriert ist:

- ein durch den Schallsensor erfasste Audiosignal zu empfangen; wobei das Audiosignal mindestens 0,1 Sekunden dauert;
- die Frequenzkomponenten des erfassten Audiosignals zu berechnen;
- eine Vielzahl von Mel-Frequenz-Spektrum-Koeffizienten aus den berechneten Frequenzkomponenten zu erhalten;

- die Mel-Frequenz-Spektrum-Koeffizienten an den auf maschinellem Lernen basierten Klassifikator zu senden, der dazu konfiguriert ist, das empfangene Audiosignal als einer Art von Abfall entsprechend zu klassifizieren, die als eine vorbestimmte Art von Abfall erkannt wird, und wobei das Klassifizieren des empfangenen Audiosignals ferner auf Grundlage der erhaltenen Mel-Frequenz-Spektrum-Koeffizienten durchgeführt wird.

**10.** Das System von Anspruch 9, wobei das Reibungselement eine Schräge ist.

**11.** Das System von einem der Ansprüche 9 oder 10, umfassend ein Auslösemodul, das an einem Einlass des Abfallbehälters angeordnet ist, wobei das Auslösemodul konfiguriert ist, um zu erkennen, dass ein Abfallgegenstand in den Abfallbehälter eingesetzt wird.

**12.** Das System von einem der Ansprüche 9 bis 11, wobei das Reibungselement eine Eintrittsschräge umfasst, die zumindest teilweise innerhalb des Abfallbehälters angeordnet und so konfiguriert ist, dass ein in den Behälter eingesetzter Abfallgegenstand auf der Schräge nach unten gleitet, wobei die Schräge ferner einen Vorsprung entlang einer Oberfläche der Eintrittsschräge in einer Position auf dem Gleitweg des Abfallgegenstands entlang der Schräge umfasst.

**13.** Das System von einem der Ansprüche 9 bis 12, wobei alle mechanischen Teile des Systems stationär sind.

**Revendications**

**1.** Un procédé de classification de déchets lorsqu'ils sont insérés dans un conteneur de déchets, le procédé comprenant:

- capturer au moins un signal audio, en utilisant un capteur sonore, le signal audio correspondant à l'interaction d'un article de déchet avec un élément de friction dans le conteneur à déchets, lorsque l'article de déchets est inséré dans le conteneur, dans lequel l'interaction comprend que l'article de déchets glisse sur l'élément de friction ; dans lequel le signal audio dure au moins 0,1 seconde ;
- calculer les composantes de fréquence du signal audio capturé ;
- obtenir une pluralité de coefficients de spectre de fréquence mel, MFSC *(mel-frequency spectrum coefficients),* à partir des composantes de fréquence calculées ;

- classer le signal audio capturé comme correspondant à un type d'article de déchets détecté comme un type prédéterminé d'article de déchets, la classification étant effectuée par un classificateur d'apprentissage automatique sur la base des coefficients de spectre de fréquence mel obtenus.

2. Le procédé de la revendication 1, dans lequel l'interaction comprend que l'article de déchets glisse sur une pente.

3. Le procédé de l'une quelconque des revendications 1 ou 2, dans lequel le classificateur d'apprentissage automatique est un réseau neuronal.

4. Le procédé de la revendication 3, dans lequel le réseau neuronal a une architecture de réseau neuronal convolutif.

5. Le procédé de l'une quelconque des revendications 1 à 4, comprenant le démarrage de la capture du signal audio lors de la détection d'un signal de déclenchement, le signal de déclenchement étant généré par un module de déclenchement situé à une entrée du conteneur de déchets.

6. Le procédé de l'une quelconque des revendications 1 ou 5, comprenant

- obtenir un signal audio de manière continue dans le temps et
- capturer le au moins un signal audio pendant au moins 0,1 seconde correspondant à l'interaction d'un article de déchets avec un élément de friction placé dans le conteneur de déchets en sélectionnant au moins un segment du signal audio obtenu.

7. Le procédé de la revendication 6, dans lequel la sélection du au moins un segment du signal audio obtenu comprend la classification d'au moins un second segment du signal audio obtenu en tant que signal non pertinent.

8. Le procédé de l'une quelconque des revendications 1 à 7, dans lequel la classification effectuée par le classificateur d'apprentissage automatique comprend les étapes consistant à :

- obtenir une carte de caractéristiques à partir des coefficients de spectre de fréquence mel, MFSC, et/ou à partir des composantes de fréquence ;
- déterminer un seuil de caractéristique pour au moins un type d'article de déchets ;
- si la carte de caractéristiques obtenue est supérieure au seuil de caractéristiques prédéterminé, déterminer que le signal audio correspond au type d'article de déchets correspondant.

9. Un système pour classer un article de déchets lorsqu'il est inséré dans un conteneur de déchets, le système comprenant :

- un élément de friction configuré pour être placé dans un conteneur de déchets pour interagir avec l'article de déchets ;
- un capteur sonore configuré pour capturer au moins un signal audio correspondant à l'interaction de l'article de déchets avec l'élément de friction, lorsque l'article de déchets est inséré dans le récipient et glisse sur l'élément de friction, dans lequel le capteur sonore est destiné à capturer le au moins un signal audio correspondant à l'interaction d'un article de déchets avec l'élément de friction pendant au moins 0,1 seconde ;
- un module de calcul connecté au capteur sonore et à un classificateur d'apprentissage automatique formé pour classer des signaux audio correspondant à des articles de déchets cibles ;
- dans lequel le module de calcul est configuré pour :

- recevoir un signal audio capturé par le capteur sonore ; dans lequel le signal audio dure au moins 0,1 seconde ;
- calculer les composantes de fréquence du signal audio capturé ;
- obtenir une pluralité de coefficients de spectre de fréquence mel à partir des composantes de fréquence calculées ;
- envoyer les coefficients de spectre de fréquence mel au classificateur d'apprentissage automatique configuré pour classer le signal audio reçu comme correspondant à un type de déchet détecté comme un type de déchet prédéterminé et dans lequel la classification du signal audio reçu est en outre effectuée sur la base des coefficients de spectre de fréquence mel obtenus.

10. Le système de la revendication 9, dans lequel l'élément de friction est une pente.

11. Le système selon l'une quelconque des revendications 9 ou 10, comprenant un module de déclenchement agencé à une entrée du conteneur de déchets, le module de déclenchement étant configuré pour détecter qu'un article de déchets est en train d'être inséré dans le conteneur de déchets.

12. Le système de l'une quelconque des revendications 9 à 11, dans lequel l'élément de friction comprend une pente d'entrée agencée au moins partiellement à l'intérieur du conteneur de déchets et configurée de telle sorte qu'un article de déchets inséré dans le conteneur glisse vers le bas sur la pente, la pente comprenant en outre une saillie le long d'une surface de la pente d'entrée dans une position sur le chemin de glissement de l'article de déchets le long de la pente.

13. Le système de l'une quelconque des revendications 9 à 12, dans lequel toutes les parties mécaniques du système sont stationnaires.

**FIG.1**

FIG. 2A

FIG. 2B

13

2A5

2A1

13

2A5

2B1

2B4

2A1

2B2

2B3

EP 4 157 747 B1

14

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 20382460
- KR 20190071387
- KR 20190056017
- CN 111160438
- EP 3194954 A1